# EUROPEAN PATENT APPLICATION

(11) **EP 4 582 615 A1**
(43) Date of publication of application: **09.07.2025**
(21) Application number: 23859264.6
(22) Date of filing: 25.08.2023
(51) Int. Cl.: D06F 25/00, D06F 58/20, D06F 58/26, D06F 58/24

(54) **LAUNDRY TREATMENT APPARATUS**

(30) Priority: 31.08.2022 CN 202222305027 U; 31.08.2022 CN 202222320973 U
(71) Applicant: Nanjing Roborock Innovation Technology Co., Ltd., Nanjing, Jiangsu 210039 (CN)
(72) Inventor: DUAN, Chuanlin, Shenzhen, Guangdong 518000 (CN); HUANG, Jibai, Shenzhen, Guangdong 518000 (CN); YANG, Zhimin, Shenzhen, Guangdong 518000 (CN); LIU, Tong, Shenzhen, Guangdong 518000 (CN); QI, Hang, Shenzhen, Guangdong 518000 (CN); QUAN, Gang, Shenzhen, Guangdong 518000 (CN)
(74) Representative: Studio Torta S.p.A.
(86) International application number: PCT/CN2023/114994
(87) International publication number: WO 2024/046232

(57) **Abstract**

A laundry treatment device, comprising a drum (A), a drying module (B) and an air intake channel (102), wherein one end of the air intake channel (102) is in communication with the drum (A), and the other end of the air intake channel is in communication with the drying module (B); and the drum (A) comprises an inner drum and an outer drum, wherein the inner drum rotates under the driving of a driving electric motor, the outer drum is provided with an air outlet (60), the air intake channel (102) is in butt-joint with the air outlet (60), and the air intake channel (102) is internally provided with a filter screen (103). Due to the filter screen (103) being arranged in the air intake channel (102) by means of which the drum (A) and the drying module (B) are connected, the laundry treatment device can filter out lint generated by the laundry in the drum (A), so as to prevent the lint from entering the drying module (B), thereby improving the stability and safety of drying.

## Description

This application claims priority to Chinese Patent Application No. 202222305027.4, filed with the China National Intellectual Property Administration (CNIPA) on August 31, 2022 and entitled " LAUNDRY TREATMENT DEVICE", the disclosure of which is incorporated herein by reference in its entirety.

This application claims priority to Chinese Patent Application No. 202222320973.6, filed with the China National Intellectual Property Administration (CNIPA) on August 31, 2022 and entitled "WASHER-DRYER MACHINE", the disclosure of which is incorporated herein by reference in its entirety.

### TECHNICAL FIELD

The present application relates to the field of electric household appliances, and more particularly, to a laundry treatment device.

### BACKGROUND

As people's living standards improve and their lifestyles change, people are no longer satisfied with the basic functions of consumer products. For the washing machine industry, a laundry treatment device having a dehumidifying function can dehumidify the laundry after washing, and is increasingly favored by consumers.

An existing laundry treatment device usually struggle to effectively manage lint generated from the laundry in a drum. The lint can easily enter a drying region to affect the dehumidifying effect, and even adheres to a surface of a heating mechanism and is then ignited.

### SUMMARY

### (I) Object of the present application

The object of the present application is to provide a laundry treatment device to solve the problem that an existing laundry treatment device struggle to effectively manage lint generated from laundries in a drum.

### (II) Technical solutions

To solve the problem described above, the present application provides a laundry treatment device, including a drum, a drying module, and an air intake passage, wherein
the air intake passage has one end communicated to the drum and the other end communicated to the drying module;
the drum is provided with an air outlet, the air intake passage is connected to the air outlet, and a filter screen is obliquely disposed in the air intake passage.

In some embodiments, the filter screen covers a first cross-section of the air intake passage; and
a first preset included angle exists between the first cross-section and an axis of the air intake passage.

In some embodiments, the first preset included angle is greater than or equal to 20 degrees and less than or equal to 90 degrees.

In some embodiments, the drying module is disposed above the drum, and the air intake passage is disposed at a rear end of the drum.

In some embodiments, the air intake passage includes a vertical passage communicated to the drying module and an arc-shaped passage communicated to the drum.

In some embodiments, a radian of the arc-shaped passage is less than or equal to a radian of a side face of the drum.

In some embodiments, the end of the air intake passage communicated to the drying module is further provided with a self-cleaning assembly; and
the self-cleaning assembly is configured to clean lint adhered to the filter screen and spray water to the filter screen.

In some embodiments, the self-cleaning assembly includes a water pipe for the air intake passage, a first nozzle and/or a second nozzle;
the water pipe for the air intake passage is configured to supply water to the first nozzle and/or the second nozzle;
the first nozzle and/or the second nozzle are arranged at two sides of the filter screen respectively; and
the first nozzle and/or the second nozzle are configured to spray water to two sides of the filter screen.

In some embodiments, the drying module includes a circulating fan, a dehumidifying module, a regenerating fan, a condensing module, and an air exhaust passage;
an air inlet of the circulating fan is communicated to an air outlet of the air intake passage, and an air outlet of the circulating fan is communicated to an air inlet of a moisture absorbing region of the dehumidifying module;
an air outlet of the moisture absorbing region of the dehumidifying module is communicated to the drum through the air exhaust passage;
an air inlet of the condensing module is communicated to an air outlet of a moisture desorbing region of the dehumidifying module, and an air outlet of the condensing module is communicated to an air inlet of the regenerating fan; and
an air outlet of the regenerating fan is communicated to an air inlet of the moisture desorbing region of the dehumidifying module.

In some embodiments, the circulating fan, the regenerating fan, and the condensing module are arranged at a side of a rotation axis of the drum in sequence in a direction from the rear end to the front end of the drum.

In some embodiments, the laundry treatment device further includes a detergent dispensing box for supplying cleaning liquid to the drum; and
the detergent dispensing box and the condensing module are arranged at two sides of the air exhaust passage respectively.

In some embodiments, the self-cleaning assembly includes a transition portion and an extension portion;
the transition portion is communicated to a water outlet of the water pipe for the air intake passage; and
the extension portion extends toward the filter screen.

In some embodiments, the extension portion includes a plurality of water spraying angles; and
a water spraying region of the self-cleaning assembly covers at least a part of a width direction of the filter screen.

In some embodiments, the extension portion is duckbill-shaped, and a width of the extension portion gradually increases in a direction away from the self-cleaning assembly.

In some embodiments, an included angle between the extension portion and the filter screen is greater than 0 degree and less than or equal to 45 degrees.

In some embodiments, the self-cleaning assembly further includes an angle adjusting member for adjusting a bending angle of the transition portion.

In some embodiments, the air inlet of the regenerating fan is communicated to an external environment.

In some embodiments, the air exhaust passage is disposed at the front end of the drum; and
the air intake passage extends from the rear end of the drum to the front end of the drum.

In some embodiments, the laundry treatment device further includes an enclosure and a filter box;
a surface of the enclosure is provided with a first opening;
the air intake passage is provided with a second opening; and
the filter box is inserted into the air intake passage through the first opening and the second opening.

In some embodiments, a door of the drum is disposed at the front end of the enclosure; and
the first opening is provided at the front end of the enclosure.

In some embodiments, the filter box is inserted into the second opening to form a sealing fit with the air intake passage; and
a part of the filter box in the air intake passage is provided with a filter screen.

### BRIEF DESCRIPTION OF DRAWINGS

FIG. 1 is a schematic structural diagram of a laundry treatment device according to a first embodiment of the present application;
FIG. 2 is a schematic structural diagram of an air intake passage of a laundry treatment device according to a second embodiment of the present application;
FIG. 3 is a schematic structural diagram of an air intake passage of a laundry treatment device according to a third embodiment of the present application;
FIG. 4 is a schematic structural diagram of an air intake passage of a laundry treatment device according to a fourth embodiment of the present application;
FIG. 5 is a schematic structural diagram of an air intake passage of a laundry treatment device according to a fifth embodiment of the present application;
FIG. 6 is a schematic structural diagram of a self-cleaning nozzle of a laundry treatment device according to a sixth embodiment of the present application;
FIG. 7 is a schematic structural diagram of a transition portion of a laundry treatment device according to a seventh embodiment of the present application;
FIG. 8 is a schematic structural diagram of a laundry treatment device according to an eighth embodiment of the present application;
FIG. 9 is a schematic structural diagram of a drying module of a laundry treatment device according to a ninth embodiment of the present application;
FIG. 10 is a schematic structural diagram of a laundry treatment device according to a tenth embodiment of the present application;
FIG. 11 is a schematic structural diagram of a laundry treatment device according to an eleventh embodiment of the present application;
FIG. 12 is a schematic structural diagram of an air intake passage of a laundry treatment device according to a twelfth embodiment of the present application; and
FIG. 13 is a schematic structural diagram of a drying module of a laundry treatment device according to a thirteenth embodiment of the present application.

A-drum; B-drying module; E-enclosure;
B-drying module; 20-dehumidifying module; 40-condensing module;
101-circulating fan; 102-air intake passage; 1021-vertical passage; 1022-arc-shaped passage;
103-filter screen; 104-first nozzle; 105-second nozzle; 106-condensing sleeve; 107-water pipe for the air intake passage; 108-self-cleaning nozzle; 1081-transition portion; 1082-extension portion; 1083-angle adjusting member; 109-condensing nozzle;
200-dehumidifying rotary disk; 201-moisture absorbing region; 202-moisture desorbing region; 203-air exhaust passage;
301-regenerating fan;
40-condensing module;
50-filter box; 51-cold water pipe; 60-air outlet; 70-first opening; 80-second opening.

### DETAILED DESCRIPTION

In the following description, a number of specific details is given to facilitate a more thorough understanding of the present application. However, it is apparent to those skilled in the art that the present application may be implemented without one or more of these details. In other examples, some technical features that are well known in the art will not be described to avoid confusion with the present application.

It shall be noted that the terms used herein are merely intended to describe specific embodiments and are not intended to limit exemplary embodiments according to the present application. As used herein, the singular form is also intended to include the plural form, unless the context clearly indicates otherwise. In addition, it shall also be understood that the terms "comprising" and/or "including", when used herein, may indicate the presence of stated features, wholes, steps, operations, components and/or assemblies, but do not exclude the presence or addition of one or more other features, wholes, steps, operations, components, assemblies and/or their combinations.

Exemplary embodiments of the present application will be described herein in more detail with reference to the accompanying drawings. However, these exemplary embodiments may be implemented in a variety of different forms and shall not be construed as being limited to the embodiments set forth herein. It shall be understood that these embodiments are provided to make the content of the present application thorough and complete and to fully communicate the ideas of these exemplary embodiments to those of ordinary skill in the art.

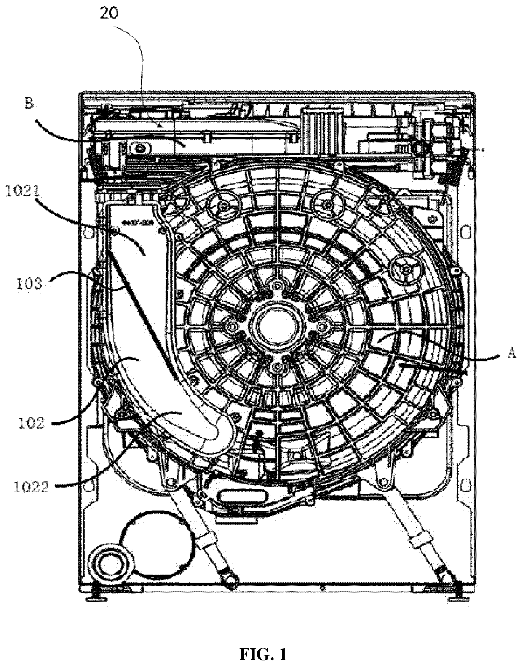

FIG. 1 is a schematic structural diagram of a laundry treatment device according to a first embodiment of the present application. As shown in FIG. 1, the laundry treatment device according to the first embodiment of the present application includes a drum A, a drying module B, and an air intake passage 102. The air intake passage 102 has one end communicated to the drum A and the other end communicated to the drying module B. The drum A is provided with an air outlet 60, the air intake passage 102 is connected to the air outlet 60, and a filter screen 103 is obliquely disposed in the air intake passage 102, such that an air flow carrying moisture in the drum A flows to the drying module B through the air intake passage 102. An inner cylinder of the drum A is driven by a drum driving motor to rotate around an axis of the drum. The drying module B is configured to dry wet clothes in the drum after washing.

The drum A includes an inner cylinder and an outer cylinder, or is of an integral structure. In an embodiment, the air outlet 60 is provided on the outer cylinder. The inner cylinder is rotatably disposed in the outer cylinder. The inner cylinder is provided with water-and-air permeable holes. The outer cylinder is made of a waterproof and air permeable material. The drum is provided with the air outlet 60. The air outlet 60 may be provided on the inner cylinder or the outer cylinder. Alternatively, both the inner cylinder and the outer cylinder are provided with air outlets 60. In an embodiment, the air outlet 60 of the inner cylinder is water-and-air permeable holes. The air outlet 60 of the outer cylinder is a through hole provided on the outer cylinder. The through hole is connected to the air intake passage.

In the laundry treatment device provided in the embodiments of the present application, the filter screen 103 is disposed in the air intake passage 102 connecting the drum A and the drying module B, such that lint generated from the laundry in the drum A can be filtered out, to prevent the lint from entering the drying module B and improve drying stability and safety. The laundry treatment device may be a dryer, a laundry treatment device, or a split-type washing machine or dryer.

Specifically, the air intake passage 102 includes a vertical passage 1021 connected to the drying module B and an arc-shaped passage 1022 connected to the drum A. The radian of the arc-shaped passage 1022 is less than or equal to the radian of a side face of the drum A.

The filter screen 103 covers a first cross-section of the air intake passage 102. A first preset included angle is formed between the first cross-section and an axis of the vertical passage 1021 of the air intake passage 102. The first preset included angle is greater than or equal to 20 degrees and less than or equal to 90 degrees. For example, the first preset included angle may be 30, 35, or 40 degrees.

In the laundry treatment device according to this embodiment, the filter screen 103 extends obliquely in the air intake passage 102. In one aspect, this can increase the area of the filter screen 103, to avoid that blockage occurs and affects air flow passing efficiency in the case of a small area. In another aspect, if any position is not cleaned well during self-cleaning, subsequent air flow passing efficiency is not significantly affected. In a further another aspect, a specific included angle is formed between the filter screen 103 and the flow direction of a first circulating air flow in the air intake passage 102, and is, for example, greater than or equal to 20 degrees, such that lint can be effectively filtered out, and lint embedded in the holes of the filter screen 103 can be removed through washing.

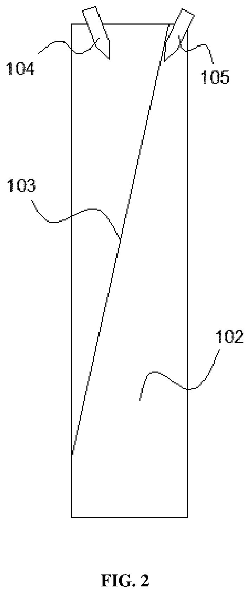

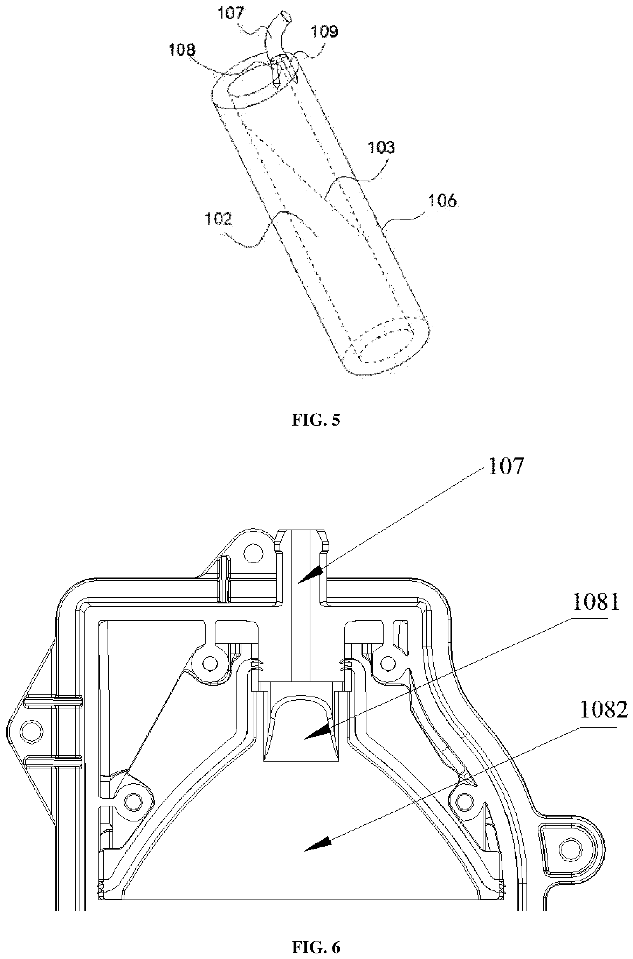

FIG. 2 is a schematic structural diagram of an air intake passage of a laundry treatment device according to a second embodiment of the present application. As shown in FIG. 2, in the laundry treatment device according to this embodiment, the end of the air intake passage 102 connected to the drying module B is further provided with a self-cleaning assembly. The self-cleaning assembly may automatically clear lint adhering to the filter screen 103. In this embodiment, the self-cleaning assembly is configured to spray water to the filter screen 103. The self-cleaning assembly includes a water pipe 107 (referring to FIG. 6) for the air intake passage, a first nozzle 104, and a second nozzle 105. The water pipe 107 for the air intake passage is configured to supply water to the first nozzle 104 and the second nozzle 105. The first nozzle 104 and the second nozzle are arranged at two sides of the filter screen 103 respectively. The first nozzle 104 and the second nozzle are configured to spray water to two sides of the filter screen 103.

In the laundry treatment device according to this embodiment of the present application, spraying water to the filter screen 103 from two sides through the first nozzle 104 and the second nozzle arranged at two sides of the filter screen 103 contributes to improving the efficiency of cleaning the filter screen 103 and prevent lint blockage.

Certainly, the self-cleaning assembly may alternatively include only the first nozzle 104 or the second nozzle 105. During self-cleaning, the first nozzle 104 or the second nozzle 105 is turned on to wash a filtering surface or a filtered surface of the filter screen 103 to remove the lint adhering thereto. In this way, the self-cleaning of the filter screen is completed.

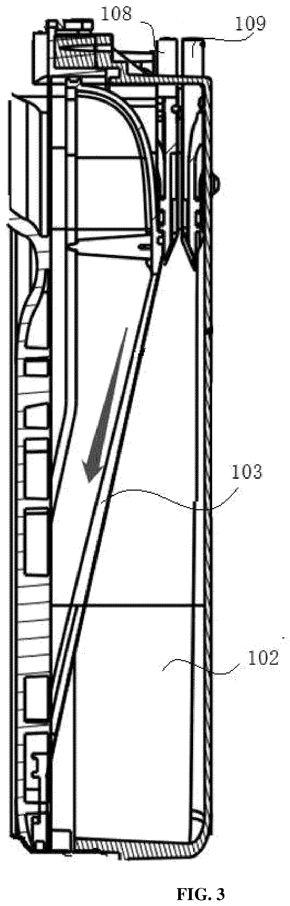

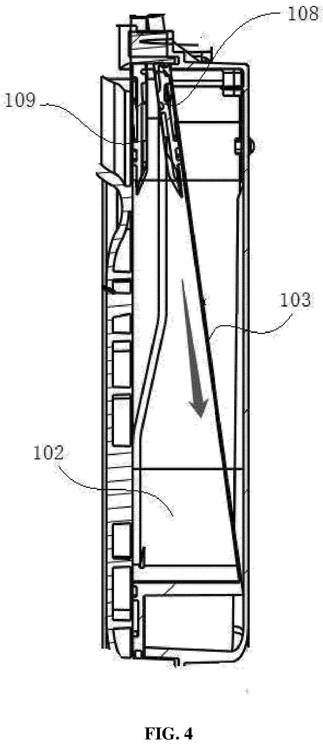

FIG. 3 is a schematic structural diagram of an air intake passage of a laundry treatment device according to a third embodiment of the present application. FIG. 4 is a schematic structural diagram of an air intake passage of a laundry treatment device according to a fourth embodiment of the present application. In the third and fourth embodiments, a setting of condensing an air flow carrying moisture and flowing through the air intake passage 102 is further included. As shown in FIG. 3 and FIG. 4, the end of the air intake passage 102 connected to the drying module B is provided with a water pipe 107 (referring to FIG. 6) for the air intake passage. The water pipe 107 for the air intake passage is connected to a water inlet of a condensed water flow passage to supply water to the condensed water flow passage. The water pipe 107 for the air intake passage optionally supplies water to the condensed water flow passage through a condensing nozzle 109. The end of the air intake passage 102 connected to the drying module B is further provided with a self-cleaning assembly. The self-cleaning assembly includes a self-cleaning nozzle 108. The water pipe 107 for the air intake passage is connected to the self-cleaning nozzle 108 to supply water to the self-cleaning nozzle 108. The self-cleaning nozzle 108 is configured to spray water to the filter screen 103. The self-cleaning nozzle 108 may include a plurality of water spraying angles, and specifically, may include a plurality of water distribution holes with different water spraying angles. A filter screen 103 is disposed in the air intake passage 102. A surface of the filter screen 103 is provided with a plurality of filter holes. The diameters of the filter holes are the same or gradually increase or decrease in the direction away from the self-cleaning nozzle 108. Alternatively, the filter holes may be irregularly distributed, for example, gradually change from the middle of the filter screen to the two sides. A water spraying region of the self-cleaning nozzle 108 covers the filter screen 103, or a water outlet end of the self-cleaning nozzle 108 is flat and spans approximately the width of the filter screen, such that water flowing out from the water outlet end can flow through the entire filter screen from top to bottom in the overall width direction of the filter screen, to remove the lint adhering to the filter screen.

In an embodiment, the water outlet end of the self-cleaning nozzle 108 may be disposed on an actual filtering surface of the filter screen 103, such that lint on the entire filtering surface can be cleared. The condensing nozzle 109 may be close to a pipe wall of the air intake passage 102 or disposed on an outer pipe wall of the air intake passage 102.

FIG. 5 is a schematic structural diagram of an air intake passage of a laundry treatment device according to a fifth embodiment of the present application. As shown in FIG. 5, the end of the air intake passage 102 connected to the drying module B according to the fifth embodiment of the present application is provided with a water pipe 107 for the air intake passage. The water pipe 107 for the air intake passage is connected to a water inlet of a condensed water flow passage to supply water to the condensed water flow passage. The water pipe 107 for the air intake passage optionally supplies water to the condensed water flow passage through a condensing nozzle 109. The end of the air intake passage 102 connected to the drying module B is further provided with a self-cleaning assembly. The self-cleaning assembly includes a self-cleaning nozzle 108. The water pipe 107 for the air intake passage is connected to the self-cleaning nozzle 108 to supply water to the self-cleaning nozzle 108. The self-cleaning nozzle 108 is configured to spray water to the filter screen 103. Certainly, the self-cleaning nozzle 108 and the condensing nozzle 109 may be butted to two separate water inlet pipes respectively. The first water inlet pipe is configured to supply water to the self-cleaning nozzle 108. The second water inlet pipe is configured to supply water to the condensing nozzle 109. The timings of turning on the self-cleaning nozzle 108 and the condensing nozzle 109 are not completely consistent. That is, the self-cleaning nozzle 108 is turned on at a specific time or when a need to clean the filter screen 103 is detected, whereas the condensing nozzle 109 may be turned on throughout the drying process or for a specific period of time. Therefore, when water is supplied to the condensing nozzle 109 and the self-cleaning nozzle 108 through the water pipe 107 for the air intake passage, switches, such as solenoid switches, may be disposed at the two nozzles respectively to control the timings of turning on them. When water is supplied to the condensing nozzle 109 and the self-cleaning nozzle 108 through separate water inlet pipes, switches may be disposed at the first water inlet pipe and the second water inlet pipe respectively to control starting and stopping.

In an implementation, a condensing sleeve 106 is sleeved on an outer wall of the air intake passage 102. A condensed water flow passage is formed between an inner wall of the condensing sleeve 106 and the outer wall of the air intake passage 102. A water outlet of the condensed water flow passage may be connected to a water outlet of the drum A or an external environment. When flowing through the condensed water flow passage, condensed water has a specific cooling effect on an air flow carrying water vapor and flowing through the air intake passage 102. In this way, when flowing through the air intake passage 102, a part of the water vapor condenses into liquid water, which is discharged out of the air intake passage 102 in the direction opposite to the flow direction of the air flow. Therefore, moisture content in the air flow is reduced, and the dehumidifying efficiency of the drying module can be significantly improved.

In the laundry treatment device according to this embodiment, the condensing sleeve 106 is sleeved on the outer wall of the air intake passage 102, such that the condensed water flow passage is formed between the inner wall of the condensing sleeve 106 and the outer wall of the air intake passage 102. This ensures that the condensed water does not spill while spraying the condensed water to the outer wall of the air intake passage 102 for condensation and dehumidification.

Certainly, to pre-dehumidify an air flow carrying moisture and flowing from the drum A to the drying module B, a condenser may be disposed inside or outside the air intake passage 102, or a condensing apparatus may be disposed between the air intake passage 102 and an air intake section of a circulating fan 101. This reduces moisture content in the air flow entering the drying module B and improves the dehumidification efficiency of the drying module B.

FIG. 6 is a schematic structural diagram of a self-cleaning nozzle of a laundry treatment device according to a sixth embodiment of the present application. As shown in FIG. 6, the self-cleaning nozzle 108 according to the sixth embodiment of the present application includes a transition portion 1081 and an extension portion 1082. The transition portion 1081 is connected to a water outlet of the water pipe 107 for the air intake passage. The extension portion 1082 extends toward the filter screen 103. The transition portion 1081 is configured to smoothly transition from the water pipe 107 for the air intake passage to the extension portion 1082, such that water can smoothly flow into the extension portion 1082 with a specific span from the water outlet of the water pipe 107 for the air intake passage. The transition portion 1081 is sleeved on the outer wall of the water pipe 107 for the air intake passage or connected to the water outlet end of the water pipe 107 for the air intake passage to form a stable connection. The extension portion 1082 is duckbill-shaped. The width of the extension portion 1082 gradually increases in the direction away from the self-cleaning nozzle 108. A water outlet end of the extension portion 1082 has a width approximately equal to that of the filter screen. The thickness of the extension portion 1082 gradually decreases in the direction away from the self-cleaning nozzle 108. A specific included angle is formed between the extension portion 1082 and the filter screen 103, and is, for example, greater than 0 degree and less than or equal to 45 degrees, such that water flow ejected from the water outlet end of the extension portion 1082 can be sprayed or uniformly flow over the entire surface of the filter screen.

The extension portion 1082 of the self-cleaning nozzle 108 according to the sixth embodiment of the present application is flat, such that the water flow can cover the entire width of the filter screen 103, to increase a water spraying area of the self-cleaning nozzle 108. The included angle between the extension portion 1082 and the filter screen 103 can further improve the cleaning efficiency.

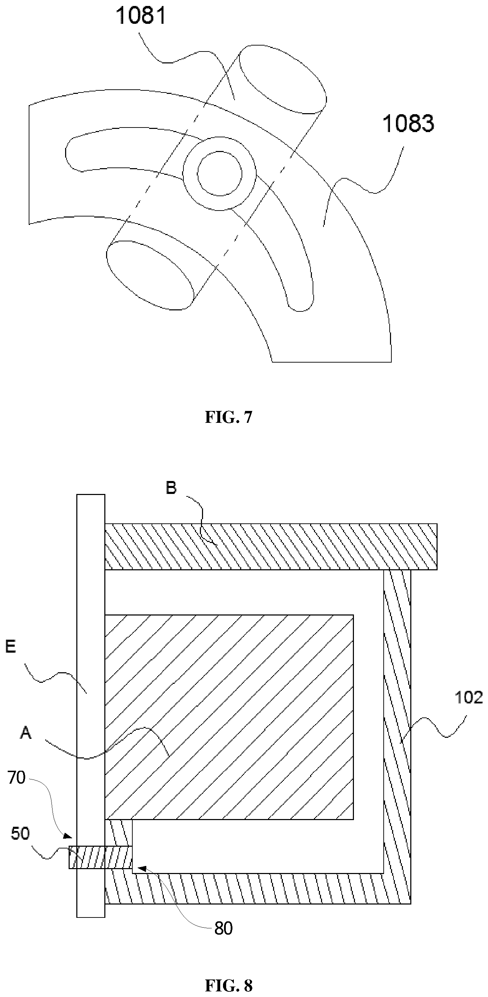

FIG. 7 is a schematic structural diagram of a transition portion of a laundry treatment device according to a seventh embodiment of the present application. As shown in FIG. 7, the transition portion 1081 according to the seventh embodiment of the present application is a hose.

The self-cleaning nozzle 108 further includes an angle adjusting member 1083. The angle adjusting member 1083 is configured to adjust a bending angle of the transition portion 1081. The angle adjusting member 1083 is sleeved on an outer wall of the transition portion 1081. The angle adjusting member 1083 is rotatably connected to the water pipe 107 for the air intake passage. The angle adjusting member 1083 may be a rotary sleeve or a sliding connector.

The transition portion 1081 according to the seventh embodiment of the present application can rotate to adjust the direction of spraying water from the extension portion 1082. In a process of cleaning the filter screen 103, in comparison with the fixedly arranged transition portion 1081, rotatably cleaning the filter screen 103 can ensure that the cleaning region covers the whole filter screen 103 in one aspect, and prevent the water flow from blocking the whole filter screen 103 at the same time and affecting the flow of the first circulating air flow during cleaning, in another aspect.

FIG. 8 is a schematic structural diagram of a laundry treatment device according to an eighth embodiment of the present application. As shown in FIG. 8, the laundry treatment device according to the eighth embodiment of the present application includes an enclosure E, a drum A, a drying module B, an air intake passage 102, and a filter box 50. The air intake passage 102 has one end communicated to the drum A and the other end communicated to the drying module B. A surface of the enclosure E is provided with a first opening 70. The air intake passage 102 is provided with a second opening 80. The first opening 70 and the second opening 80 may be matched with each other. The filter box 50 is inserted into the air intake passage 102 through the first opening 70 and the second opening 80.

A door of the drum A is disposed at the front end of the enclosure E. The first opening 70 is provided at the front end of the enclosure E. At least a part of the air intake passage 102 is attached to the front end of the enclosure E. The second opening 80 is provided in the region where the air intake passage 102 is attached to the enclosure E. Alternatively, the air intake passage 102 is not attached to the enclosure E, with a specific spacing therebetween. The first opening 70 is still provided at the front end of the enclosure E. The second opening 80 is provided on the air intake passage 102 at a position corresponding to the first opening 70.

In some embodiments, openings are provided in both the top surface and the bottom surface of the filter box 50. A filter screen 103 is disposed in the filter box 50.

In some embodiments, the top surface of the filter box 50 has an opening shape. The bottom surface of the filter box 50 is provided with a filter screen 103.

In some embodiments, the top surface and the bottom surface of the filter box 50 are each provided with a filter screen 103.

In some embodiments, the filter box 50 extends into the second opening 80 to form a sealing fit with the air intake passage. The part of the filter box in the air intake passage 102 is provided with an inclined filter screen 103.

With the above arrangement, after the filter box 50 is mounted in place, the part of the filter box 50 extending into the second opening 80 and disposed in the air intake passage 102 forms a part of the air intake passage 102. The filter screen 103 filters out debris such as lint in an air flow flowing out of the drum A. The filtered air flow then enters the drying module B along the air intake passage 102.

In some embodiments, the air intake passage 102 is disposed at the front end of the drum A; and an air exhaust passage 203 is disposed at the rear end of the drum A.

In some embodiments, the air exhaust passage 203 is disposed at the front end of the drum A; and the air intake passage 102 extends from the rear end of the drum A to the front end of the drum A.

The air exhaust passage 203 above is an air flow passage through which an air flow flows from the drying module B into the drum A. Opposite openings of the air intake passage 102 and the air exhaust passage 203 on the drum A are provided at the front end and the rear end of the drum A respectively. This can promote the air flow to be in sufficient contact with the laundry to be dried in the drum A, and improve the drying efficiency. Certainly, for the convenience of the overall structure design, the air intake passage 102 and the air exhaust passage 203 may also be disposed at the same end of the drum A, or disposed at a specific interval.

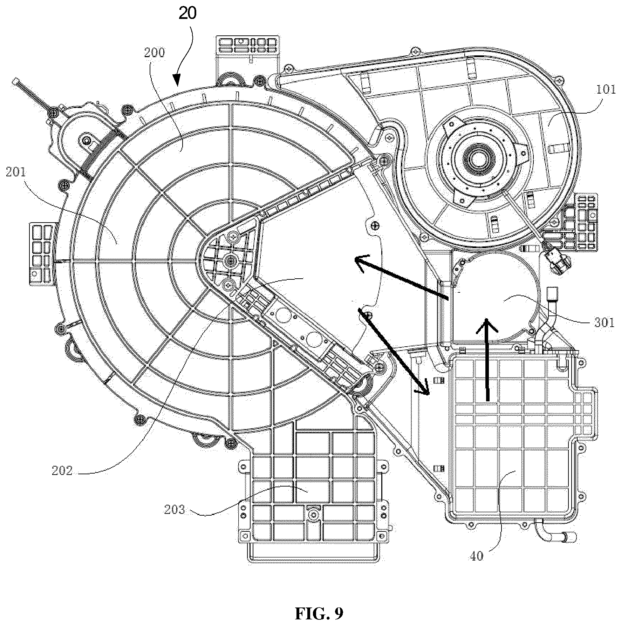

FIG. 9 is a schematic structural diagram of a drying module of a laundry treatment device according to a ninth embodiment of the present application. As shown in FIG. 9, the drying module B of the laundry treatment device according to the ninth embodiment of the present application includes a circulating fan 101, a dehumidifying module 20, a regenerating fan 301, a condensing module 40, and an air exhaust passage 203. An air outlet of the dehumidifying module 20 is connected to a drum A through the air exhaust passage 203. A door is disposed at the front end of the drum A. The drying module B is disposed above the drum A. An air intake passage 102 is disposed at the rear end of the drum A.

An air inlet of the circulating fan 101 is connected to an air outlet of the air intake passage 102. An air outlet of the circulating fan 101 is connected to an air inlet of the dehumidifying module 20. The circulating fan 101 is configured to form a pressure difference between the air inlet and the air outlet of the circulating fan 101 through rotation, to push air in the drum A to flow into the circulating fan 101 through the air intake passage 102, then flow into the dehumidifying module 20 from the air outlet of the circulating fan 101, and finally flow into the drum A from the dehumidifying module 20 through the air exhaust passage 203. In this way, a first circulating air flow is formed between the drum A and the dehumidifying module 20.

An air outlet of the regenerating fan 301 is connected to the dehumidifying module 20. An air inlet of the regenerating fan 301 is connected to an air outlet of the condensing module 40. An air inlet of the condensing module 40 is connected to the dehumidifying module 20. The regenerating fan 301 is configured to form a pressure difference between the air inlet and the air outlet of the regenerating fan 301 through rotation, to push air in the dehumidifying module 20 to flow into the condensing module 40, then flow into the regenerating fan 301 from the air outlet of the condensing module 40, and finally flow into the dehumidifying module 20 from the regenerating fan 301. In this way, a second circulating air flow is formed between the dehumidifying module 20 and the condensing module 40. The flow direction of the second circulating air flow is shown by the arrows in FIG. 9.

The dehumidifying module 20 includes a dehumidifying member housing and a dehumidifying rotary disk 200. The dehumidifying rotary disk 200 is rotatably mounted in the dehumidifying member housing through a rotating shaft. The dehumidifying rotary disk 200 may be of a porous structure covered with a dehumidifying material. The dehumidifying material may be a cotton cloth, fibers, zeolites, lithium chloride, a molecular sieve, or the like. A rotary disk motor is disposed in the dehumidifying member housing for driving the dehumidifying rotary disk 200. Moisture is absorbed by the dehumidifying rotary disk when humid air flows through the dehumidifying rotary disk 200, such that the humidity of the air decreases.

The dehumidifying member housing includes a moisture absorbing region 201 in a passage of the first circulating air flow and a moisture desorbing region 202 in a passage of the second circulating air flow. A regenerating member, such as a heater, is disposed in the moisture desorbing region 202. A part of the dehumidifying rotary disk 200 which rotates to the moisture absorbing region 201 absorbs the moisture in the first circulating air flow. A part of the dehumidifying rotary disk 200 which rotates to the moisture desorbing region 202 desorbs the absorbed moisture under the action of the heater. The desorbed moisture flows into the condensing module 40 along with the second circulating air flow.

The condensing module 40 is configured to cool the second circulating air flow, such that a part of the moisture in the second circulating air flow condenses into liquid, which is discharged through a water outlet of the condensing module 40. The water outlet of the condensing module 40 may be connected to a water outlet of the drum A, or may be directly connected to an external environment.

In some embodiments, the laundry treatment device further includes a detergent dispensing box disposed above the drum A for supplying a cleaning liquid to the drum A.

In some embodiments, the laundry treatment device further includes a water inlet pipe, including a first water outlet, a second water outlet, and a third water outlet. The first water outlet is provided with a first solenoid valve switch for controlling the opening and closing of the first water outlet. The second water outlet is provided with a second solenoid valve switch for controlling the opening and closing of the second water outlet. The third water outlet is provided with a third solenoid valve switch for controlling the opening and closing of the third water outlet. The first water outlet, the second water outlet, and the third water outlet may be arranged side by side or in two rows.

The first water outlet is connected to a washing water pipe to supply water to a water inlet of the drum A. The washing water pipe is further configured to supply water to the detergent dispensing box to dilute and bring the detergent in the detergent dispensing box into the drum A.

The second water outlet is connected to a condenser water pipe to supply water to a condenser of the condensing module 40.

The third water outlet is connected to a water pipe 107 for the air intake passage to supply water to the air intake passage 102. The end of the air intake passage 102 connected to the drying module B is provided with a self-cleaning nozzle 108. The water pipe 107 for the air intake passage is connected to the self-cleaning nozzle 108 to supply water to the self-cleaning nozzle 108. The self-cleaning nozzle 108 is configured to spray water to a filter screen 103. The end of the air intake passage 102 connected to the drying module B may further be provided with a condensing nozzle 109. The water pipe 107 for the air intake passage is connected to the condensing nozzle 109 to supply water to the condensing nozzle 109. The condensing nozzle 109 is configured to spray water to an inner wall or outer wall of the air intake passage 102.

The bottom surfaces of the circulating fan 101, the regenerating fan 301, and the condensing module 40 may be substantially on the same plane. The circulating fan 101, the regenerating fan 301, and the condensing module 40 are generally disposed on a side of the dehumidifying module 20.

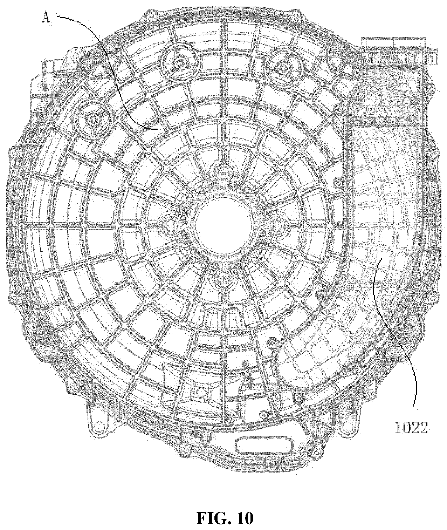

FIG. 10 is a schematic structural diagram of a laundry treatment device according to a tenth embodiment of the present application. As shown in FIG. 10, an air intake passage 102 is disposed at the right rear of a drum A as viewed from the rear end of the drum A. A water inlet of a water inlet pipe is provided at the right rear of the drum A. The water inlet pipe is directly connected to a water inlet of a self-cleaning assembly. This arrangement eliminates the need for the water inlet pipe to span the drum A, to reduce damage to the water inlet pipe due to vibration during operation of the drum A.

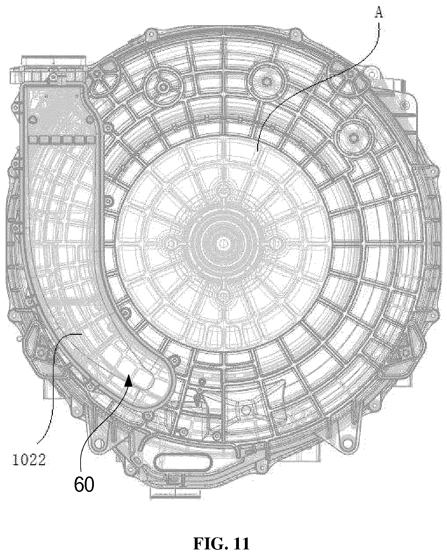

FIG. 11 is a schematic structural diagram of a laundry treatment device according to an eleventh embodiment of the present application. As shown in FIG. 11, an air intake passage 102 is disposed at the left rear of a drum A. A water inlet of a water inlet pipe is provided at the right rear of the drum A. The water inlet pipe spans the drum A and is then connected to a water inlet of a self-cleaning assembly. A condensing module 40 is disposed on the left side of an air exhaust passage 203. A detergent dispensing box is disposed on the right side of the air exhaust passage 203.

In some embodiments, a drying module B further includes an auxiliary condensing module. An air outlet of the air intake passage 102 is connected to an air inlet of the auxiliary condensing module. An air inlet of a circulating fan 101 is connected to an air outlet of the auxiliary condensing module. In this way, an air flow carrying moisture and flowing out of the air intake passage 102 is further dehumidified, to reduce the moisture content in an air flow entering the drying module B and improve the drying efficiency.

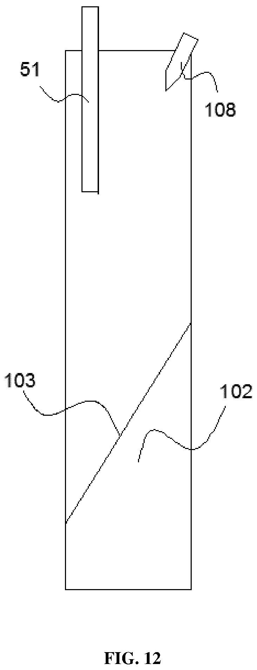

FIG. 12 is a schematic structural diagram of an air intake passage 102 of a laundry treatment device according to a twelfth embodiment of the present application. As shown in FIG. 12, a self-cleaning assembly, a filter screen 103, and a cold water pipe 51 are disposed in the air intake passage 102 according to the twelfth embodiment of the present application. The cold water pipe 51 is disposed above the filter screen 103. The self-cleaning assembly is disposed above the cold water pipe 51.

In the laundry treatment device according to this embodiment, the cold water pipe 51 is disposed so that high-temperature humid air flow can be condensed to reduce moisture content before entering the drying module B for subsequent dehumidification. This helps improve the dehumidification efficiency.

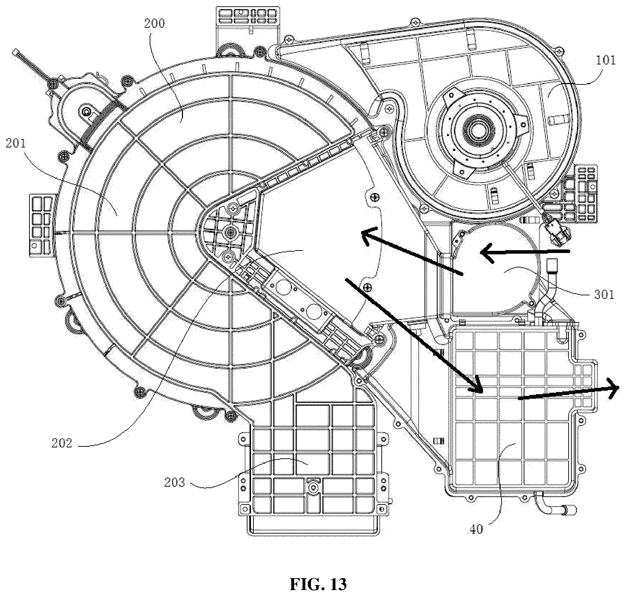

FIG. 13 is a schematic structural diagram of a drying module of a laundry treatment device according to a thirteenth embodiment of the present application. As shown in FIG. 13, the drying module B of the laundry treatment device according to the thirteenth embodiment of the present application includes a circulating fan 101, a dehumidifying module 20, a regenerating fan 301, a condensing module 40, and an air exhaust passage 203. An air inlet of the circulating fan 101 is connected to an air outlet of an air intake passage 102. An air outlet of the circulating fan 101 is connected to an air inlet of a moisture absorbing region of the dehumidifying module 20. An air outlet of the moisture absorbing region 20 of the dehumidifying module is communicated to a drum A through the air exhaust passage 203. An air inlet of the regenerating fan 301 is connected to an external environment. An air outlet of the regenerating fan 301 is connected to an air inlet of a moisture desorbing region of the dehumidifying module 20. An air inlet of the condensing module 40 is connected to an air outlet of the moisture desorbing region of the dehumidifying module 20. An air outlet of the condensing module 40 is connected to the external environment.

The air inlet of the circulating fan 101 is connected to the air outlet of the air intake passage 102. The air outlet of the circulating fan 101 is connected to the air inlet of the moisture absorbing region of the dehumidifying module 20. The circulating fan 101 is configured to form a pressure difference between the air inlet and the air outlet of the circulating fan 101 through rotation, to push air in the drum A to flow into the circulating fan 101 through the air intake passage 102, then flow into the moisture absorbing region of the dehumidifying module 20 from the air outlet of the circulating fan 101, and finally flow into the drum A from the dehumidifying module 20 through the air exhaust passage 203. In this way, a first circulating air flow is formed between the drum A and the dehumidifying module 20.

The air inlet of the regenerating fan 301 is connected to the external environment. The air outlet of the regenerating fan 301 is connected to the air inlet of the moisture desorbing region of the dehumidifying module 20. The air inlet of the condensing module 40 is connected to the air outlet of the moisture desorbing region of the dehumidifying module 20. The air outlet of the condensing module 40 is connected to the external environment. The regenerating fan 301 is configured to form a pressure difference between the air inlet and the air outlet of the regenerating fan 301 through rotation, to push air in the external environment to flow into the regenerating fan 301, then flow into the moisture desorbing region of the dehumidifying module 20 from the air outlet of the regenerating fan 301, then flow into a condenser from the moisture desorbing region of the dehumidifying module 20, and finally flow into the external environment from the condenser. In this way, a second circulating air flow is formed between the moisture desorbing region of the dehumidifying module 20 and the condensing module 40. The flow direction of the second circulating air flow is shown by the arrows in FIG. 13.

It should be understood that the above specific embodiments of the present application are only used to illustrate or explain the principles of the present application, and should not constitute any limitation to the present application. Therefore, any modifications, equivalent substitutions, improvements, etc. made without departing from the spirit and scope of the present application should be included within the protection scope of the present application. Furthermore, the appended claims of the present application are intended to cover all changes and modifications that fall within the scopes and boundaries of the appended claims, or equivalents of such scopes and boundaries.

## Claims

1. A laundry treatment device, comprising a drum, a drying module, and an air intake passage, wherein
the air intake passage is provided with one end communicated to the drum and the other end communicated to the drying module; and
the drum is provided with an air outlet, the air intake passage is connected to the air outlet, and a filter screen is obliquely disposed in the air intake passage.

2. The laundry treatment device according to claim 1, wherein the filter screen covers a first cross-section of the air intake passage; and
a first preset included angle is formed between the first cross-section and an axis of the air intake passage.

3. The laundry treatment device according to claim 2, wherein the first preset included angle is greater than or equal to 20 degrees and less than or equal to 90 degrees.

4. The laundry treatment device according to claim 1, wherein the drying module is disposed above the drum, and the air intake passage is disposed at a rear end of the drum.

5. The laundry treatment device according to claim 1, wherein the air intake passage comprises a vertical passage communicated to the drying module and an arc-shaped passage communicated to the drum.

6. The laundry treatment device according to claim 5, wherein a radian of the arc-shaped passage is less than or equal to a radian of a side face of the drum.

7. The laundry treatment device according to claim 1, wherein the end of the air intake passage communicated to the drying module is further provided with a self-cleaning assembly; and
the self-cleaning assembly is configured to clean lint adhered to the filter screen and spray water to the filter screen.

8. The laundry treatment device according to claim 7, wherein the self-cleaning assembly comprises a water pipe for the air intake passage, and a first nozzle and/or a second nozzle;
the water pipe for the air intake passage is configured to supply water to the first nozzle and/or the second nozzle;
the first nozzle and/or the second nozzle are arranged at two sides of the filter screen respectively; and
the first nozzle and/or the second nozzle are configured to spray water to the two sides of the filter screen.

9. The laundry treatment device according to any one of claims 1 to 8, wherein the drying module comprises a circulating fan, a dehumidifying module, a regenerating fan, a condensing module, and an air exhaust passage;
an air inlet of the circulating fan is communicated to an air outlet of the air intake passage, and an air outlet of the circulating fan is communicated to an air inlet of a moisture absorbing region of the dehumidifying module;
an air outlet of the moisture absorbing region of the dehumidifying module is communicated to the drum through the air exhaust passage;
an air inlet of the condensing module is communicated to an air outlet of a moisture desorbing region of the dehumidifying module, and an air outlet of the condensing module is communicated to an air inlet of the regenerating fan; and
an air outlet of the regenerating fan is communicated to an air inlet of the moisture desorbing region of the dehumidifying module.

10. The laundry treatment device according to claim 9, wherein the circulating fan, the regenerating fan, and the condensing module are arranged at a side of a rotation axis of the drum in sequence in a direction from a rear end to a front end of the drum.

11. The laundry treatment device according to claim 9, further comprising a detergent dispensing box for supplying cleaning liquid to the drum, wherein
the detergent dispensing box and the condensing module are arranged at two sides of the air exhaust passage respectively.

12. The laundry treatment device according to claim 7, wherein the self-cleaning assembly comprises a transition portion and an extension portion;
the transition portion is communicated to a water outlet of a water pipe for the air intake passage; and
the extension portion extends toward the filter screen.

13. The laundry treatment device according to claim 12, wherein the extension portion comprises a plurality of water spraying angles; and
a water spraying region of the self-cleaning assembly covers at least a part of a width direction of the filter screen.

14. The laundry treatment device according to claim 12, wherein the extension portion is duckbill-shaped, and a width of the extension portion gradually increases in a direction away from the self-cleaning assembly.

15. The laundry treatment device according to claim 12, wherein an included angle between the extension portion and the filter screen is greater than 0 degree and less than or equal to 45 degrees.

16. The laundry treatment device according to claim 12, wherein the self-cleaning assembly further comprises an angle adjusting member for adjusting a bending angle of the transition portion.

17. The laundry treatment device according to claim 9, wherein
the air inlet of the regenerating fan is communicated to an external environment.

18. The laundry treatment device according to claim 17, wherein the air exhaust passage is disposed at a front end of the drum; and
the air intake passage extends from a rear end of the drum to the front end of the drum.

19. The laundry treatment device according to any one of claims 7, and 12 to 18, further comprising an enclosure and a filter box, wherein
a surface of the enclosure is provided with a first opening;
the air intake passage is provided with a second opening; and
the filter box is inserted into the air intake passage by passing through the first opening and the second opening.

20. The laundry treatment device according to claim 19, wherein a door of the drum is disposed at a front end of the enclosure; and
the first opening is provided at the front end of the enclosure.

21. The laundry treatment device according to claim 19, wherein the filter box is inserted into the second opening to form a sealing fit with the air intake passage; and
a part of the filter box in the air intake passage is provided with the filter screen.
